Europäisches Patentamt

European Patent Office

Office Européen des brevets

(19)

(11) Numéro de publication : **0 235 020 B1**

(12)

# FASCICULE DE BREVET EUROPEEN

(45) Date de publication du fascicule du brevet :
02.01.91 Bulletin 91/01

(51) Int. Cl.⁵ : **B01D 3/22**

(21) Numéro de dépôt : 87400285.0

(22) Date de dépôt : 09.02.87

(54) **Colonne de distillation à circulation hélicoïdale de liquide avec espacement dissymétrique des plateaux.**

(30) Priorité : 18.02.86 FR 8602186

(43) Date de publication de la demande :
02.09.87 Bulletin 87/36

(45) Mention de la délivrance du brevet :
02.01.91 Bulletin 91/01

(84) Etats contractants désignés :
AT BE DE ES GB IT NL

(56) Documents cités :
EP-A- 0 057 493
DE-A- 2 321 475

(72) Inventeur : Gourlia, Jean Paul
11 rue Duguesclin
F-69006 Lyon (FR)
Inventeur : Thiebaut, Marie-Florence
41 rue Stephan Coignet
F-69003 Lyon (FR)

(74) Mandataire : Timoney, Ian Charles Craig
SOCIETE NATIONALE ELF AQUITAINE
Departement Propriété Industrielle Tour Elf
Cedex 45
F-92078 Paris La Défense (FR)

(73) Titulaire : SOCIETE NATIONALE ELF
AQUITAINE
Tour Elf, 2, Place de la Coupole, La Défense 6
F-92400 Courbevoie (FR)

## Description

La présente invention se rapporte aux colonnes de distillation à plateaux dans lesquelles les gaz et les vapeurs subdivisés en courants séparés rencontrent à contre-courant une phase liquide cheminant en sens hélicoidal d'un plateau à l'autre.

Elle concerne plus particulièrement une colonne de distillation dans laquelle les plateaux en forme de demi-cercle sont disposés alternativement de part et d'autre d'une paroi verticale continue le long de celle-ci, ladite paroi divisant la colonne en deux secteurs étanches au passage des vapeurs, dont chacun loge une série de plateaux, les plateaux successifs d'une même série étant séparés d'une distance fixe D, chaque plateau comportant à l'un de ses bords une aire de réception de liquide et à l'autre un pan coupé formant le déversoir, lesdites aires de réception et lesdits déversoirs étant situés alternativement dans la succession de plateaux superposés tantôt d'un, tantôt de l'autre côté du plateau, de sorte que le liquide suive un chemin hélicoidal.

De telles colonnes sont connues et l'une d'elles a fait l'objet de FR-A-2577147 au nom de la déposante et de EP-A-0057493.

Pour maintenir un rendement horaire de distillation élevé, on s'attache à réaliser des débits liquide et vapeur maximaux circulant dans la colonne. La valeur de ces débits détermine la perte de charge du courant de gaz et de vapeur montant d'un plateau à l'autre. D'autre part, cette perte de charge et le débit liquide commandent la détermination de la hauteur h du liquide remplissant le puits de déversement alimentant chaque plateau. Cette hauteur h est un paramètre dont il est tenu compte au moment de la conception de la colonne de distillation, notamment pour la détermination de l'espacement D entre les plateaux, qui est habituellement de l'ordre de 2h, sauf dans le cas où l'entrainement du liquide par la phase gazeuse impose une contrainte supérieure.

La perte de charge $\Delta p$ du courant de gaz et de vapeurs montant d'un plateau à l'autre est, d'une part, liée à cette hauteur h et, d'autre part, à l'espacement D des plateaux successifs.

Dans une colonne classique réalisant un courant croisé du liquide par rapport au gaz et dont la conception a été définie en fixant la valeur de D par rapport aux débits souhaités de liquide, l'espacement D entre les plateaux successifs est constant.

En effet, les gaz et les vapeurs subissant en montant le même allègement de la perte de charge $\Delta p$, tandis que le liquide descendant rencontre le même accroissement de pression $\Delta p$ dans chaque intervalle entre les plateaux successifs, il n'y avait aucune raison de concevoir un espacement dissymétrique quelconque des plateaux successifs.

Il en est tout autrement pour une colonne à demi-plateaux à cheminement hélicoidal du liquide. En effet, dans de telles colonnes, si les gaz d'un courant donné montant à l'intérieur d'un secteur donné de la colonne continuent à subir un allègement de perte de charge $\Delta p$ égal d'un plateau à l'autre, le liquide, selon qu'il passe dans son parcours hélicoidal, par exemple de gauche à droite ou de droite à gauche, rencontre en changeant de secteur, tantôt la même pression en passant d'un demi-plateau d'un premier secteur à un autre demi-plateau du second secteur, au dessus desquels demi-plateaux, appelés plateaux du même ordre ou isobares, règne la même pression, tantôt une pression différente en passant d'un demi-plateau du second secteur à un autre demi-plateau du premier secteur où règne une pression augmentée d'une perte de charge $\Delta p$, par rapport au premier demi-plateau.

La présente invention repose donc sur l'idée d'introduction dans les colonnes de distillation à cheminement hélicoidal de liquide d'une dissymétrie dans l'espacement des demi-plateaux et elle est caractérisée en ce que la distance de décalage d entre les demi-plateaux appartenant aux secteurs différents mais situés dans le même ordre de passage des vapeurs ou du liquide est entre 0,4 et 0,15 D.

L'avantage d'une telle disposition est l'augmentation de la charge liquide.

L'invention sera illustrée plus en détail à l'aide de dessins, dont

la figure 1 représente une vue schématique d'une portion de colonne classique à plateaux superposés réalisant un courant croisé du liquide par rapport au gaz,

la figure 2 présente une vue schématique d'une portion de colonne à demi-plateaux décalés axialement à cheminement du liquide en sens hélicoidal, conforme à l'invention, et

la figure 3 présente un graphique montrant la variation de la charge maximale admissible en fonction de l'espacement d d'un demi-plateau d'un secteur par rapport aux deux demi-plateaux de l'autre secteur de la colonne.

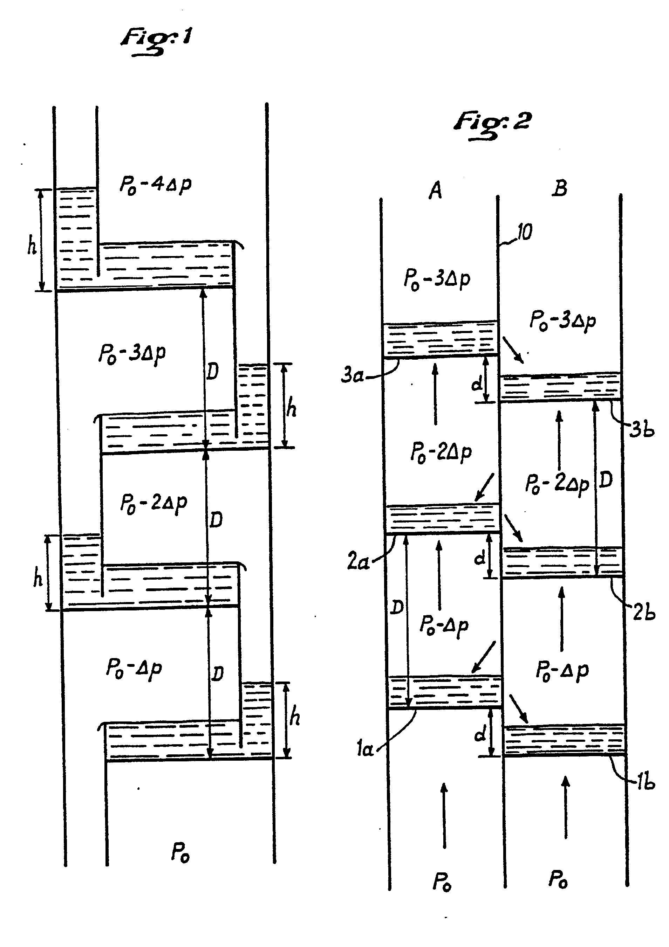

Dans une colonne classique représentée à la figure 1, il s'établit, en fonction des conditions de fonctionnement, en particulier en fonction de la pression des vapeurs et des débits, dans le puits de déversement du liquide alimentant les plateaux superposés un niveau de liquide clair h, dont une partie équilibre la perte de charge $\Delta p$ que rencontre le liquide ruisselant d'un plateau à l'autre dans chaque intervalle entre les plateaux. Ainsi, si la pression dans l'intervalle entre un couple de plateaux à l'entrée de gaz est Po, cette pression prend des valeurs Po-$\Delta p$, Po-2$\Delta p$, Po-3$\Delta p$ et ainsi de suite, dans les intervalles entre les couples de plateaux supérieurs. Cette perte de charge étant identique entre chaque couple de plateaux et les conditions de fonctionnement restant stables, la distance D séparant deux plateaux superposés reste identique et habituellement égale à 2h.

Une colonne de section circulaire à cheminement hélicoïdal de liquide (figure 2) est divisée par une paroi verticale 10 en deux secteurs étanches au passage de gaz et de vapeurs A et B, chaque secteur logeant une série de plateaux.

Les plateaux disposés sont désignés respectivement 1a, 2a, 3a pour le secteur A et 1b, 2b, 3b pour le secteur B. La distance D séparant deux demi-plateaux successifs d'une même série est constante. Par contre, les demi-plateaux d'une série sont décalés dans le sens axial de la colonne par rapport aux demi-plateaux de l'autre série et espacement d entre les demi-plateaux appartenant aux secteurs différents mais situés dans le même ordre de passage des vapeurs ou du liquide est entre 0,4 et 0,15 D.

Le liquide circulant de gauche à droite entre les plateaux isobares du même ordre, à savoir, passant successivement des plateaux 3a, 2a, 1a vers les plateaux 3b, 2b, 1b, rencontre partout un milieu à la même pression. Différemment, le liquide circulant de droite à gauche, à savoir, passant respectivement des plateaux 3b, 2b vers les plateaux 2a, 1a, rencontre chaque fois une pression supérieure de Δp à celle qu'il vient de quitter. Ainsi qu'il a été exposé précédemment, la distance entre les plateaux successifs est fonction, entre autre, de la perte de charge au niveau du gaz surmontant les plateaux qu'il s'agit d'équilibrer au moyen d'une hauteur adéquate de liquide dans le puits de déversement.

L'absence de perte de charge, lorsque le liquide rencontre un plateau où règne la même pression que celle du plateau qu'il vient de quitter, permet de rapprocher les plateaux successifs, comme c'est le cas des plateaux du même ordre isobares 1a et 1b, 2a et 2b, 3a et 3b.

Les derniers plateaux de la même série restant séparés d'une distance constante D, les conditions de fonctionnement de la phase vapeur restent bonnes.

Par contre, puisqu'il faut maintenir une hauteur de liquide dans les puits de déversement entre les plateaux présentant une perte de charge, à savoir, 3b et 2a, 2b et 1a, ce but reste atteint grâce à l'espacement D-d entre lesdits plateaux.

Le décalage d du demi-plateau d'un secteur par rapport au demi-plateau de l'autre secteur du même ordre de passage des vapeurs ou du liquide, c'est à dire l'espacement entre les demi-plateaux appartenant aux secteurs différents mais situés dans le même ordre de passage des vapeurs ou du liquide, peut varier entre 0,4 et 0,15 D.

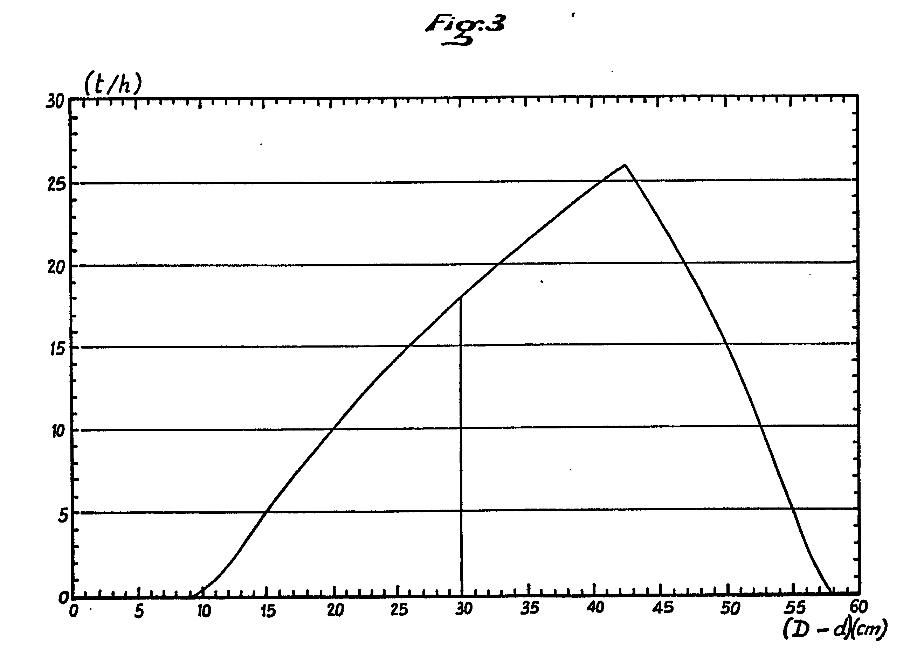

Le graphique présenté à la figure 3 permet d'étudier la variation de la charge liquide maximale admissible en fonction de l'ordonnée (D-d), lorsqu'on fait varier la valeur de cette dernière entre les limites 0 et D, c'est à dire en variant l'espacement entre deux demi-plateaux successifs de paires différentes. Il s'avère, que pour une colonne de stabilisation des essences dont la distance entre deux demi-plateaux successifs du même secteur est de 600 mm, la charge liquide maximale admissible ne se situe pas pour une équidistance, c'est à dire lorsque le demi-plateau d'un secteur est à mi-distance entre les deux demi-plateaux du secteur opposé (300 mm). On voit que l'optimum est atteint pour une valeur d d'environ 150 mm par rapport au demi-plateau du même ordre (isobare) appartenant au secteur opposé, ce qui correspond à la valeur (D-d) d'environ 450 mm pour ce qui est de l'espacement par rapport à l'autre demi-plateau d'ordre différent appartenant au secteur opposé. Ces distances placent le demi-plateau 1a respectivement à 150 mm du plateau 1b et à 450 mm du plateau 2b.

## Revendications

1/ Colonne de distillation à plateaux dans laquelle des plateaux en demi-cercles sont disposés alternativement de part et d'autre d'une paroi (10) verticale continue le long de celle-ci, ladite paroi divisant la colonne en deux secteurs (A, B) étanches au passage des vapeurs, dont chacun loge une série de plateaux (1a, 2a, 3a et 1b, 2b, 3b) les plateaux successifs d'une même série étant séparés d'une distance fixe D et la série de demi-plateaux d'un secteur est décalée dans le sens axial de la colonne par rapport à la série de l'autre secteur, chaque plateau comportant à l'un de ses bords une aire de réception de liquide et à l'autre un pan coupé formant le déversoir, lesdites aires de réception et lesdits déversoirs étant situés alternativement dans la succession de plateaux superposés tantôt d'un, tantôt de l'autre côté du plateau, de sorte que le liquide suive un chemin hélicoïdal, les pressions agissant sur les demi-plateaux d'une même paire (1a/1b, 2a/2b, 3a/3b) étant égales, caractérisée en ce que la distance de décalage d entre les demi-plateaux appartenant aux secteurs différents mais situés dans le même ordre de passage des vapeurs ou du liquide est entre 0, 4 et 0, 15 D.

2/ Colonne de distillation selon la revendication 1, caractérisée en ce que la distance de décalage d est égale à environ 0,3 D.

## Ansprüche

1. Böden aufweisende Destillationskolonne, bei welcher halbkreisförmige Böden abwechselnd auf beiden Seiten einer vertikalen durchgehenden Wand (10) längs dieser angeordnet sind, wobei die Wand die Kolonne in zwei für den Durchgang von Dämpfen dichte Sektoren (A, B) unterteilt, von denen jeder eine Reihe der Böden (1a, 2a, 3a und 1b, 2b, 3b) aufnimmt, die aufeinanderfolgenden Böden ein und derselben Reihe um einen festen Abstand (D) getrennt sind, die Reihe der Halbböden eines Sektors in Axialrichtung der Kolonne bezüglich der Reihe des anderen Sektors versetzt angeordnet ist, jeder Boden an einem seiner Ränder eine Flüssigkeits-aufnahmefläche und an dem anderen ein den Überlauf bildendes ausgeschnittenes Feld aufweist, die Aufnahmeflächen und die Überläufe alternativ in der Folge der übereinanderliegenden Böden bald auf der einen und bald auf der anderen Seite des Bodens positioniert sind, so daß die Flüssigkeit einem schraubenförmigen Weg folgt, und die auf die Halbböden ein und desselben Paares (1a/1b, 2a/2b, 3a/3b) wirkenden Drucke gleich sind, dadurch **gekennzeichnet**, daß der Versetzungsabstand (d) zwischen den Halbböden, die zu den verschiedenen Sektoren gehören, aber in der gleichen Durchgangsreihe für die Dämpfe oder der Flüssigkeit liegen, zwischen 0,4 und 0,15 D beträgt.

2. Destillationskolonne nach Anspruch 1, dadurch **gekennzeichnet**, daß der Versetzungsabstand (d) ungefähr 0,3 D gleich ist.

## Claims

1. Plate distillation column in which the semi-circular plates are disposed alternately on either side of a continuous vertical wall (10) along the length thereof, the said wall dividing the column into two segments (A, B) which are sealed with respect to the passage of vapours, each of which houses a number of plates (1a, 2a, 3a and 1b, 2b, 3b), the successive plates in one group being separated by a fixed distance D and the group of half-plates in one segment being offset in the axial direction of the column with respect to the group of the other segment, each plate comprising on one of its edges a liquid receiving area and on the other edge a cut face forming the discharging member, the said receiving areas and the said discharging areas being located alternately in the succession of superimposed plates first on one side and then on the other side of the plate, such that the liquid follows a helical path, the pressures acting on the half-plates in one pair (1a/1b, 2a/2b. 3a/3b) being equal, characterised in that the offsetting distance d between the half-plates belonging to the different segments but located in the same order for the passage of the vapours or liquid is between 0.4 and 0.15 D.

2. Distillation column as claimed in claim 1, characterised in that the offsetting distance d is approximately 0.3 D.

*Fig. 1*

*Fig. 2*

Fig.3